# EUROPÄISCHE PATENTSCHRIFT

(11) **EP 0 528 166 B1**
(45) Veröffentlichungstag und Bekanntmachung des Hinweises auf die Patenterteilung: **26.10.1994**
(21) Anmeldenummer: 92111776.8
(22) Anmeldetag: 10.07.1992
(51) Int. Cl.: F02B 23/06, F02F 3/28

(54) **Ein im Koldenboden ausgebildeter Brennraum mit vorwiegend drallfreier Lufteinströmung für Brennkarftmaschine**
Antigyratory combustion chamber in the head piston for internal combustion engine
Chambre de combustion formée dans la tête du piston à effet antigiratoire pour moteur à combustion interne

(30) Priorität: 21.08.1991 DE 4127617
(43) Veröffentlichungstag der Anmeldung: 24.02.1993
(73) Patentinhaber: MERCEDES-BENZ AG, 70327 Stuttgart (DE)
(72) Erfinder: Augustin, Ulrich, Dr., W-7053 Kernen (DE)

(56) Entgegenhaltungen:
- BE-A- 516 370
- CH-C- 216 497
- DE-C- 655 093
- DE-C- 3 742 574
- FR-A- 1 104 319
- FR-A- 1 373 853
- GB-A- 570 968

## Beschreibung

Die Erfindung betrifft eine Brennkraftmaschine mit vorwiegend drallfreier Lufteinströmung in einen flach ausgebildeten Brennraum nach den im Oberbegriff des Patentanspruchs 1 angegebenen Merkmalen.

Aus der CH-PS 216 497 ist ein flacher Brennraum zwischen Zylinderkopf und Kolben bekannt, dessen Kolbenboden mit radial verlaufenden Vertiefungen bzw. Mulden für die Einspritzstrahlen einer zentral angeordneten Mehrlochdüse versehen ist. Die von der Kolbenbodenmitte ausgehenden Vertiefungen führen bis zur Wand der Mulde, so daß eine Zylinderwandbenetzung des Kraftstoffes vermieden wird. Die Ränder dieser Vertiefungen sind kantenförmig ausgebildet und behindern damit die Ausdehnung des gezündeten Luft-Kraftstoff-Gemisches in Umfangsrichtung des Brennraums.

Aus der DE-AS 1 476 075 ist ein Kolbenboden mit eingeformten Vertiefungen bekannt, die sich zwar in Richtung der Kraftstoffstrahlen einer zentral angeordneten Mehrlochdüse bis in die Nähe des Kolbenrandes erstrecken, die mit flachen Übergangsradien in den Kolbenboden verlaufen. Zwischen den Vertiefungen befinden sich jedoch ebene Abschnitte auf dem Kolbenboden, was strömungstechnisch ungünstig ist.

Der Erfindung liegt die Aufgabe zugrunde, Maßnahmen an einer Brennkraftmaschine der gattungsgemäßen Art vorzusehen, durch die weitere Verbesserungen der Gemischbildung bei Brennverfahren mit vorwiegender Luftverteilung erzielbar sind, wobei insbesondere die Ausdehnung des gezündeten Gemisches in der Umfangsrichtung des Brennraums ohne Strömungsverluste erfolgen soll.

Zur Lösung der Aufgabe dienen die im Patentanspruch 1 angegebenen Merkmale.

Durch die besondere strömungstechnische Kontur der Kolbenmulde haben die Randzonen der Einspritzstrahlen einen größeren Abstand zum Zylinderkopf und zu den Vertiefungen im Muldengrund, Kraftstoffanlagerungen werden vermieden, ebenso Anlagerungen des Kraftstoffes an der Zylinderwand und im Kolbenringbereich. Der wellenförmige Verlauf des Muldengrunds sorgt für geringe Strömungsverluste und vermeidet Strömungsablösungen.

Den Unteransprüchen lassen sich förderliche Weiterbildungen der Erfindung entnehmen.

Der Gegenstand der Erfindung ist in der Zeichnung dargestellt und im folgenden anhand eines Ausführungsbeispieles näher beschrieben. Es zeigen:
- Fig. 1: einen Kolben mit Kolbenmulde, teilweise in Schnittdarstellung, und
- Fig. 2: den oberen Bereich des Kolbens mit Kolbenmulde in perspektivischer Ansicht.

Eine nicht näher dargestellte Brennkraftmaschine mit vorwiegend drallfreier Lufteinströmung in den flach ausgebildeten Brennraum 1 weist einen Kolben 2 mit einer kreisrunden Kolbenmulde 3 auf, die achsgleich zum Kolben 2 liegt.

Im Zylinderkopf 4 dieser Brennkraftmaschine ist eine der Kolbenmulde 3 zentral gegenüberliegende Mehrlochdüse 5 mit acht Spritzlöchern 6 angeordnet.

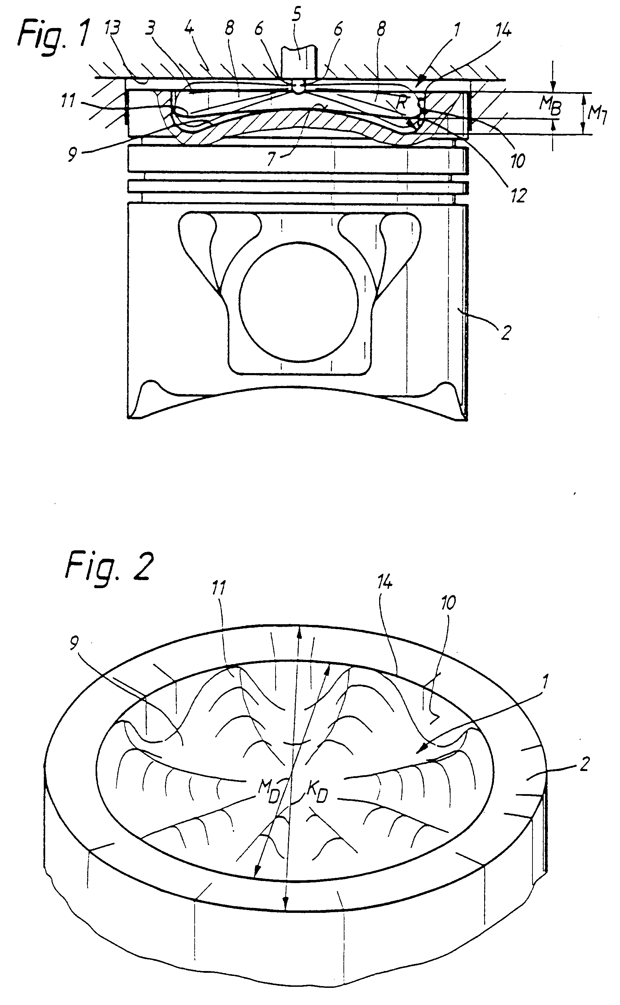

Die den Brennraum 1 bildende Kolbenmulde 3 weist im Muldenboden 7 der Anzahl der Einspritzstrahlen 8 entsprechende Vertiefungen 9 auf, die sich von der Kolbenmuldenmitte bis zur zylindrischen Muldenwand 10 unter kontinuierlicher Erweiterung und Vertiefung erstrecken und der Strahlform der Einspritzstrahlen angepaßt sind (Fig. 1).

Die eingeformten Vertiefungen 9 sind so gestaltet, daß die Kontur des Muldenbodens in Umfangsrichtung gesehen einen sinusförmigen bzw. wellenförmigen Verlauf hat. Für jeden Einspritzstrahl 8 ist somit eine Vertiefung 9 und zwischen den Einspritzstrahlen 8 eine Erhöhung 11 vorhanden. Zwischen der Vertiefung 9 und der Erhöhung 11 bzw. Wellental und Wellenberg ergibt sich ein weicher Übergang ohne scharfe Kanten. Auch der Übergang 12 zwischen dem Muldenboden 7 und der zylindrischen Muldenwand 10 ist bogenförmig gestaltet (Fig. 1).

Eine bevorzugte Ausbildung des Kolbens 2 ergibt sich dadurch, daß der Durchmesser M_{D} der Kolbenmulde 3 70-80% des Durchmessers K_{D} des Kolbens 2 beträgt und die Kolbenmulde 3 eine mittige Muldentiefe Mₘ von 5-10% des Kolbendurchmessers K_{D} aufweist, wobei die Muldentiefe M_{T} zwischen dem Kolbenmuldenrand 14 und der größten Vertiefung 9 13-21% und die Muldentiefe M_{B} zwischen dem Kolbenmuldenrand 14 und der größten Erhöhung 11 2-14% des Kolbendurchmessers K_{D} beträgt.

Der Übergang 12 zwischen dem Muldenboden 7 und der zylindrischen Muldenwand 10 ist durch einen Radius R gebildet, der 4-12% des Kolbendurchmessers K_{D} entspricht.

Durch die geringe Tiefe der Kolbenmulde 3 und durch die ebene Begrenzungsfläche 13 am Zylinderkopf liegt eine flache Brennraumform vor, die Kraftstoffanlagerungen am Kolbenboden und am Zylinderkopf 4 aufgrund der eingeformten Vertiefungen 9 im Muldenboden 7 vermeidet.

Durch die besondere Muldenkontur vergrößert sich die Muldenoberfläche und bewirkt bei gleicher Wandtemperatur eine geringere Verbrennungstemperatur mit der Folge reduzierter NOₓ-Emissionen. Nach Zündung der zuerst aufbereiteten Luft-Kraftstoffgemische findet eine Mikroströmung in Richtung der noch nicht brennenden Bereiche statt. Der wellenförmige Verlauf der Vertiefungen 9 sorgt für geringe Strömungsverluste.

## Patentansprüche

1. Brennkraftmaschine mit vorwiegend drallfreier Lufteinströmung in einen flach gestalteten Brennraum, mit einer zentral angeordneten Einspritzdüse mit mehreren Spritzlöchern, mit im Kolben eingeformten und der Anzahl der Einspritzstrahlen entsprechenden Vertiefungen, die von der Kolbenmitte ausgehend sich in Richtung der Einspritzstrahlen erstrecken und der Strahlform weitgehend angepaßt sind,
**dadurch gekennzeichnet,**
daß der Kolben (2) eine flach ausgebildete Kolbenmulde (3) besitzt, daß die Vertiefungen (9) im Muldenboden (7) eingeformt sind, derart, daß bezogen auf die Umfangsrichtung der Kolbenmulde (3) die Vertiefungen (9) einen sinusförmigen bzw. wellenförmigen Verlauf haben, und daß der Übergang (12) zwischen dem Muldenboden (7) und der Muldenwand (10) bogenförmig und in Umfangsrichtung wellenförmig verläuft.

2. Brennkraftmaschine nach Anspruch 1,
**dadurch gekennzeichnet,**
daß sich die Vertiefungen (9) im Muldenboden (7) in Richtung der Einspritzstrahlen (8) unter kontinuierlicher Erweiterung und Vertiefung in Anpassung an die Form der Einspritzstrahlen bis zur Muldenwand (10) der Kolbenmulde (3) erstrecken.

3. Brennkraftmaschine nach den vorhergehenden Ansprüchen,
**dadurch gekennzeichnet,**
daß die Anzahl der Einspritzstrahlen zwischen fünf und acht liegt.

## Claims

1. Internal-combustion engine with predominantly swirl-free air inflow into a shallow combustion space, having a centrally arranged injection nozzle with a plurality of spray holes, and having depressions which are formed in the piston and correspond to the number of injection jets and which, starting from the centre of the piston, extend in the direction of the injection jets and are substantially matched to the jet shape, characterised in that the piston (2) has a shallow piston recess (3), and in that the depressions (9) are formed in the recess bottom (7) in such a way that the depressions (9) have a sinusoidal or corrugated shape in relation to the circumferential direction of the piston recess (3) and that the transition (12) between the recess bottom (7) and the recess wall (10) is arcuate and circumferentially corrugated.

2. Internal-combustion engine according to Claim 1, characterised in that the depressions (9) in the recess bottom (7) extend in the direction of the injection jets (8), widening and deepening continuously to match the shape of the injection jets, as far as the recess wall (10) of the piston recess (3).

3. Internal-combustion engine according to the preceding claims, characterised in that the number of injection jets is between five and eight.

## Revendications

1. Moteur à combustion interne présentant une entrée d'air essentiellement dépourvue de tourbillonnement dans une chambre de combustion de forme plate, comprenant un injecteur placé au centre et possédant plusieurs trous d'injection, et comprenant des creux formés dans le piston et correspondant au nombre des jets injectés, creux qui partent du milieu du piston, s'étendent dans la direction des jets injectés et sont adaptés dans une large mesure à la forme des jets,
caractérisé en ce que
le piston (2) possède une cuvette (3) de forme plate, que les creux (9) sont formés dans le fond (7) de la cuvette de manière que, par rapport à la direction périphérique de la cuvette (3) du piston, les creux (9) aient une allure sinusoïdale ou ondulée, et que la transition (12) entre le fond (7) de la cuvette et la paroi (10) de la cuvette a une forme incurvée et un profil ondulé dans la direction périphérique.

2. Moteur à combustion interne selon la revendication 1, caractérisé en ce que les creux (9) dans le fond (7) de la cuvette s'étendent dans la direction des jets injectés (8) en s'élargissant et en s'approfondissant de façon continue, en adaptation à la forme des jets injectés, jusqu'à la paroi (10) de la cuvette (3) du piston.

3. Moteur à combustion interne selon les revendications précédentes, caractérisé en ce que le nombre des jets injectés est compris entre et cinq et huit.
